# EUROPEAN PATENT SPECIFICATION

(11) **EP 4 012 444 B1**
(45) Date of publication and mention of the grant of the patent: **09.09.2026**
(21) Application number: 20849139.9
(22) Date of filing: 27.07.2020
(51) Int. Cl.: G01S 13/34

(54) **RADAR APPARATUS**
RADARVORRICHTUNG
APPAREIL RADAR

(30) Priority: 07.08.2019 JP 2019145601
(43) Date of publication of application: 15.06.2022
(73) Proprietor: Astemo, Ltd., Tokyo 100-0004 (JP)
(72) Inventor: KURODA, Hiroshi, Hitachinaka-shi, Ibaraki 312-8503 (JP); SASAKI, Satoshi, Hitachinaka-shi, Ibaraki 312-8503 (JP)
(74) Representative: MERH-IP Matias Erny Reichl Hoffmann Patentanwälte PartG mbB
(86) International application number: PCT/JP2020/028623
(87) International publication number: WO 2021/024822

(56) References cited:
- EP-A1- 0 777 133
- DE-A1- 102014 212 280
- JP-A- 2002 168 946
- JP-A- H03 154 888
- JP-A- S61 145 472
- US-A1- 2012 169 529

## Description

### Technical Field

The present disclosure relates to a frequency-modulated continuous wave radar apparatus.

### Background Art

Inventions related to a so-called FM-CW radar apparatus that detects the relative distance and the relative speed of a target object by using a transmission wave of millimeter waves having a frequency that changes with time and a reception wave obtained by reflecting the transmission wave are known in the related art (see PTL 1). An object of the invention in the related art is to provide a radar apparatus capable of accurately calculating a relative speed and a relative distance even when a plurality of reception waves are measured for one transmission wave (see the paragraph 0009 and the like in PTL 1). The invention is described by the content of the independent claim.

PTL 1 discloses a radar apparatus having a configuration as follows, as means for achieving this object (see Claim 1 and the like in PTL 1). The radar apparatus includes electromagnetic wave transmitting/receiving means and information detecting means. The electromagnetic wave transmitting/receiving means transmits, as the transmission wave, beams of electromagnetic waves having a repetitive modulation section in which the frequency changes in a predetermined frequency range with the elapse of time, and receives a reflected wave from a target of the transmission wave. The information detecting means detects target information based on a beat signal generated by mixing a transmission wave and a reception wave.

Further, the information detecting means includes beat signal frequency spectrum measuring means and state value detecting means. The beat signal frequency spectrum measuring means measures a first beat signal frequency spectrum and a second beat signal frequency spectrum in each of a first section in which the frequency transitions with time in the transmission wave, and a second section that has the same slope of frequency transition with time as the first section and has a predetermined time interval.

The state value detecting means compares a first peak group and a second peak group. The first peak group has predetermined intensity or higher and appears in the first beat signal frequency spectrum. The second peak group has predetermined intensity or higher and appears in the second beat signal frequency spectrum. The state value detecting means calculates a phase change amount of a peak, which causes the frequency of a peak included in the first peak group to be substantially equal to the frequency of a peak included in the second peak group, and detects the relative speed and the relative distance of a target, which correspond to the peak, from the phase change amount.

Further, an invention related to a radar apparatus suitable for measuring the position of a detection object such as a preceding vehicle and the relative speed to the own vehicle with high accuracy is known (see PTL 2). An object of the invention is to provide a radar apparatus capable of accurately obtaining the distance and the speed of a target even when a target other than the target to be measured exists in the detection field of view of a radar (see the paragraph 0030 and the like in PTL 2).

PTL 2 discloses a radar apparatus as follows, as means for achieving this object (see Claim 1 and the like in PTL 2). The radar apparatus includes a signal generation unit, a transmission unit, a reception unit, and a reception signal processing unit. A transmission signal that is generated by the signal generation unit and emitted from the transmission unit has a first modulation section on a time axis and a second modulation section on the time axis in a unit modulation section.

The first modulation section is a modulation section in which radio waves following at least two sweep frequency straight lines having a frequency slope with respect to the time axis are periodically switched and transmitted. The second modulation section is a modulation section in which radio waves of at least two frequencies having no frequency gradient with respect to the time axis are periodically switched and transmitted. Then, the signal processing unit has a function of processing the reflected wave of the transmission signal, which has been reflected by a target and then received by the receiving unit to obtain at least one of the distance to the target and the relative speed.

PTL 3 discloses a FMCW radar sensor and method for determining a relative speed of a radar target, in which an FMCW radar measurement is carried out with a transmission signal, the modulation pattern of which includes temporally nested sequences of ramps and a two-dimensional spectrum is calculated from the baseband signals separately for each of the sequences.

PTL 4 discloses an FM-CW radar which is suitable for automotive anti-collision systems. This radar outputs a radar signal in the form of a triangular wave whose frequency is increased at a given rate and decreased at a given rate. A receiver receives a wave reflected from a target to produce a beat signal and takes the Fourier transform of the beat signal to determine peak frequency components thereof showing peaks in a frequency spectrum.

### Citation List

### Patent Literature

PTL 1: International Publication No. 2006/134912
PTL 2: JP 2008-128946 A
PTL 3: DE 10 2014 212280 A1
PTL 4: EP 0 777 133 A1

### Summary of Invention

### Technical Problem

The radar apparatus in the related art disclosed in PTL 1 compares the peak groups appearing in the beat signal frequency spectra of the first section and the second section, which are modulation sections of different transmission waves, and detects the relative speed and relative distance of the target from the phase change amount that causes the frequencies to be substantially equal to each other. In this case, if the relative speed between the own vehicle equipped with the radar apparatus and the target increases, the positional relation between the own vehicle and the target changes. Thus, it is not possible to detect the relative speed and the relative distance with high accuracy.

In the radar apparatus in the related art disclosed in PTL 2, in a situation in which a plurality of targets exist, even though the measurement result of one of the first modulation section and the second modulation section includes a large error, it is possible to verify the correctness of the measurement result by the measurement in the other modulation section. Thus, it is possible to exhibit an excellent effect that it is possible to reduce an output of erroneous detection data. However, in such a radar apparatus in the related art, an apparatus configuration that changes a modulation pattern between the first modulation section and the second modulation section is required. In addition, ringing may occur in the frequency of radio waves when the modulation pattern is changed, and thus the signal-to-noise ratio (S/N ratio) may decrease.

The present disclosure provides a frequency-modulated continuous wave radar apparatus capable of measuring a distance to a target more accurately than the related art, without changing a modulation pattern of a frequency of a transmission wave.

### Solution to Problem

According to an aspect of the present disclosure, there is provided a radar apparatus of a frequency-modulated continuous wave type. The radar apparatus includes a transmission antenna that transmits a transmission wave, a reception antenna that receives a reception wave, a mixer that outputs a beat frequency signal indicating a difference between a frequency of the transmission wave and a frequency of the reception wave, and a signal processing device that processes the beat frequency signal and calculates a distance to a target. The signal processing device sets a plurality of processing periods by shifting a detection time within a modulation period of the transmission wave, processes the beat frequency signal in each of the processing periods to detect a peak signal, and calculates the distance based on a phase difference between a plurality of the peak signals. Wherein the distance R to the target in the calculation is obtained by the following expression: $R = \frac{∅}{4 π} \frac{c}{\left(f2-f1\right)}$ Wherein f2 and f2 are center frequencies in processing periods of FFT processing functions F31, F32 and φ is the phase difference between the peak signals P1 and P2, which are the processing results of the FFT processing functions F31 and F32. The plurality of processing periods T1, T2, T3 includes a period that overlaps a portion of each of the processing periods within the modulation period T and is common to all the processing periods.

### Advantageous Effects of Invention

According to the above aspect of the present disclosure, it is possible to provide a frequency-modulated continuous wave radar apparatus capable of measuring the distance to a target more accurately than the related art, without changing a modulation pattern of a frequency of a transmission wave.

### Brief Description of Drawings

[FIG. 1] FIG. 1 is a functional block diagram illustrating a configuration of a radar apparatus according to Embodiment 1.
[FIG. 2A] FIG. 2A is an explanatory diagram of an example of a storage device constituting a signal processing unit in the radar apparatus.
[FIG. 2B] FIG. 2B is an explanatory diagram of an example of the storage device.
[FIG. 2C] FIG. 2C is an explanatory diagram of an example of the storage device.
[FIG. 3] FIG. 3 is an explanatory diagram of a modulation pattern generation function and a processing period setting function of the signal processing unit.
[FIG. 4] FIG. 4 is an explanatory diagram of the processing period setting function.
[FIG. 5] FIG. 5 is an explanatory diagram of an FFT processing function and a peak detection function of the signal processing unit.
[FIG. 6] FIG. 6 is an explanatory diagram of a distance and speed calculation function of the signal processing unit.
[FIG. 7] FIG. 7 is an explanatory diagram of the distance and speed calculation function.
[FIG. 8] FIG. 8 is an explanatory diagram of a processing period setting function of a signal processing unit in a radar apparatus according to Embodiment 2.
[FIG. 9] FIG. 9 is an explanatory diagram of the processing period setting function.
[FIG. 10] FIG. 10 is an explanatory diagram of a distance and speed calculation function of the signal processing unit.
[FIG. 11] FIG. 11 is an explanatory diagram of a speed calculation method using a radar apparatus in the related art.
[FIG. 12] FIG. 12 is an explanatory diagram of the speed calculation method using the radar apparatus in the related art.
[FIG. 13] FIG. 13 is an explanatory diagram of the speed calculation method using the radar apparatus in the related art.
[FIG. 14] FIG. 14 is an explanatory diagram of the speed calculation method using the radar apparatus in the related art.

### Description of Embodiments

Hereinafter, embodiments of a radar apparatus according to the present disclosure will be described with reference to the drawings.

### [Embodiment 1]

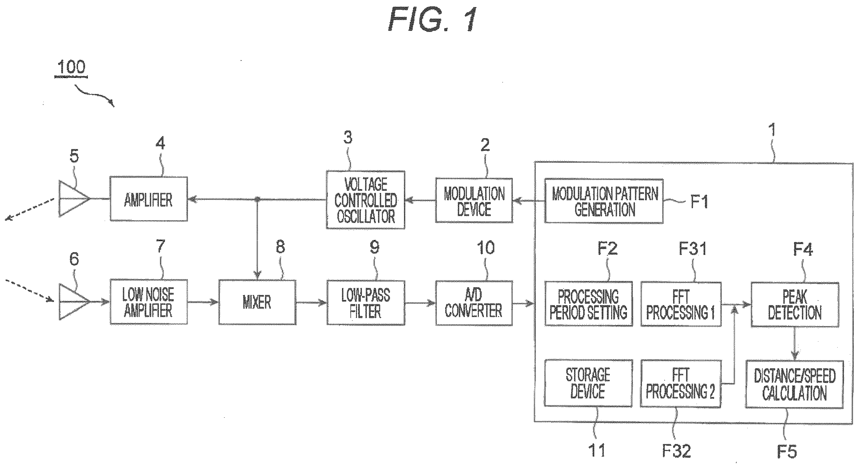

FIG. 1 is a block diagram illustrating Embodiment 1 of the radar apparatus according to the present disclosure.

A radar apparatus 100 in the present embodiment is, for example, a medium and short range millimeter-wave radar constituting an external-environment sensor mounted on a vehicle in order to realize automatic driving (AD), advanced driver assistance system (ADAS), and the like of the vehicle with high reliability and high accuracy. The radar apparatus 100 is attached to, for example, the four corners of the vehicle, that is, the front, rear, left, and right corners of the vehicle. In the medium and. short range millimeter-wave radar, for example, it is necessary to measure the distance to a target such as a pedestrian, a surrounding vehicle, or another obstacle and the relative speed of the target with higher accuracy.

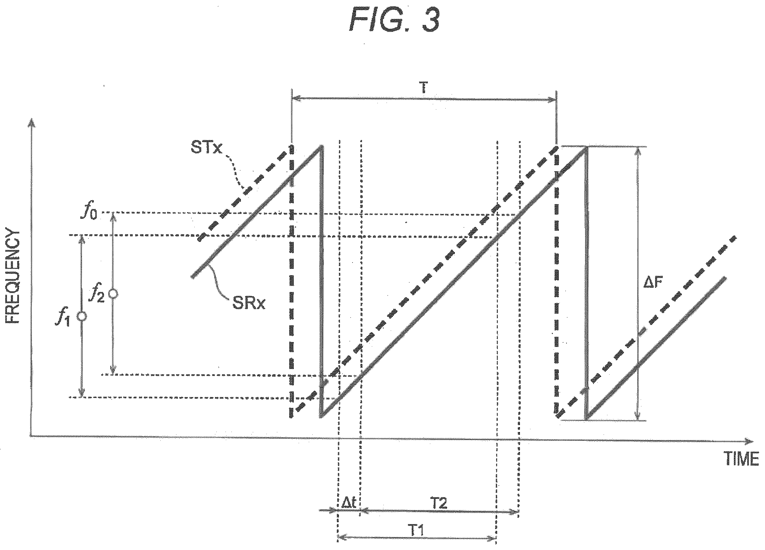

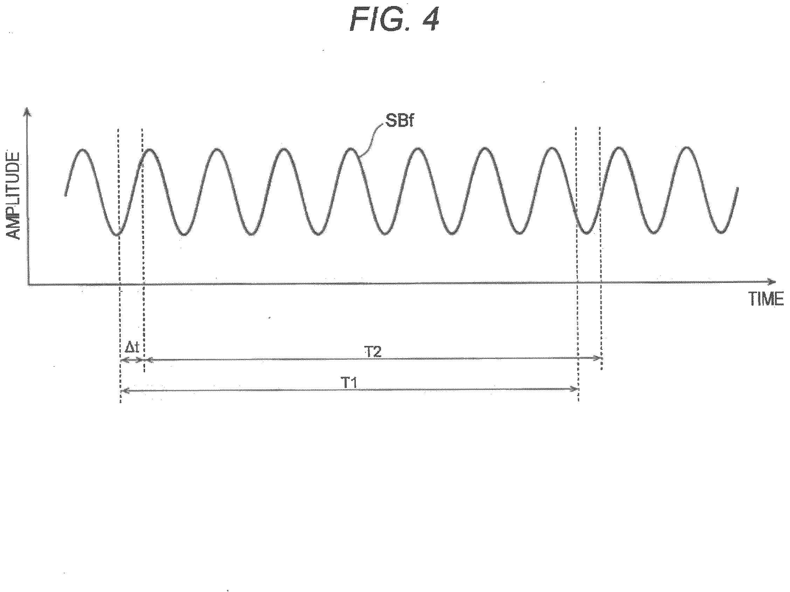

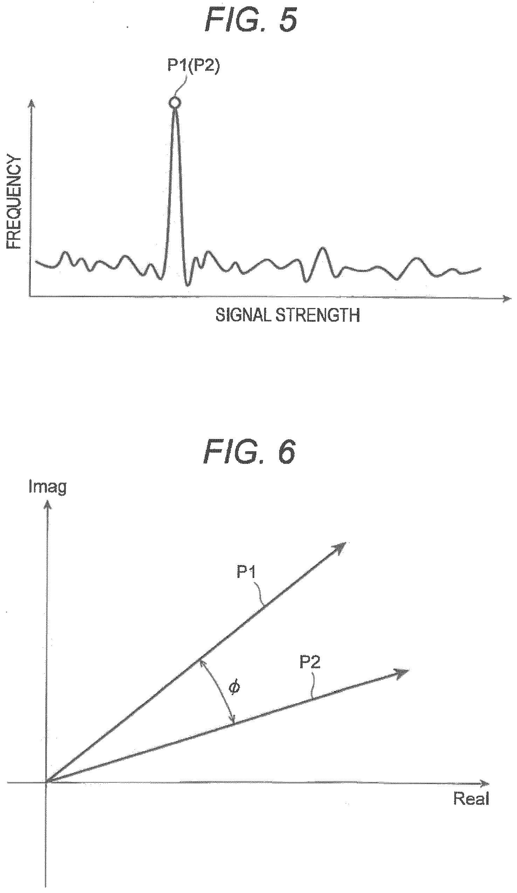

Although the details will be described later, the radar apparatus 100 in the present embodiment is a radar apparatus of a frequency-modulated continuous wave (FM-CW) type and has a configuration as follows as the main features. The radar apparatus 100 includes a transmission antenna 5 that transmits a transmission wave, a reception antenna 6 that receives a reception wave, a mixer 8 that outputs a beat frequency signal SBf (see FIG. 4) indicating a difference between a frequency of the transmission wave and a frequency of the reception wave, and a signal processing device 1 that processes the beat frequency signal SBf and calculates a distance to a target. The signal processing device 1 sets a plurality of processing periods T1 and T2 by shifting a time within a modulation period T (see FIG. 3) of a transmission wave, processes the beat frequency signal SBf in the respective processing periods T1 and T2 to detect peak signals P1 and P2 (see FIG. 5), and calculates the distance to a target based on a phase difference φ (see FIG. 6) between a plurality of the peak signals P1 and P2.

The configuration of each unit of the radar apparatus 100 in the present embodiment will be described below in detail. For example, the radar apparatus 100 in the present embodiment includes a signal processing device 1, a modulation device 2, a voltage controlled oscillator 3, an amplifier 4, a transmission antenna 5, a reception antenna 6, a low noise amplifier 7, a mixer 8, a low-pass filter 9, and an A/D converter 10.

The signal processing device 1 is, for example, a computer system configured by a microcontroller and firmware. For example, the signal processing device 1 includes a central processing unit (CPU), a storage device 11 configured by a RAM, a hard disk, and the like, computer programs and data stored in the storage device 11, a signal input/output unit, and the like. The signal processing device 1 may be, for example, an electronic control unit (ECU) that is mounted on a vehicle and performs engine control and travel control of the vehicle.

For example, the signal processing device 1 has a modulation pattern generation function F1, a processing period setting function F2, a plurality of FFT processing functions F31 and F32, a peak detection function F4, and a distance and speed calculation function F5. Each of the functions is realized by, for example, the central processing unit, the storage device 11, the computer programs and data stored in the storage device 11, the signal input/output unit, and the like, that constitute the signal processing device 1.

The modulation pattern generation function F1 of the signal processing device 1 outputs a command for generating a voltage waveform that continuously changes in a predetermined period, to the modulation device 2 by, for example, the central processing unit.. More specifically, in the modulation pattern generation function F1, the central processing unit outputs a command for generating a voltage waveform of, for example, a triangular wave or a sawtooth wave to the modulation device 2.

The modulation device 2 takes, as an input, the command output by the modulation pattern generation function F1 of the signal processing device 1, generates a voltage waveform that continuously changes in a predetermined period based on the command, and outputs the generated voltage waveform to the voltage controlled oscillator 3. More specifically, the modulation device 2 generates, for example, a voltage waveform of a triangular wave or a sawtooth wave to the voltage controlled oscillator 3 based on the command output from the central processing unit constituting the modulation pattern generation function F1, for example.

The voltage controlled oscillator 3 takes, as an input, the voltage waveform output from the modulation device 2, generates a transmission signal having an oscillation frequency controlled in accordance with the voltage waveform, and outputs the generated transmission signal to the amplifier 4 and the mixer 8. More specifically, the voltage controlled oscillator 3 outputs a transmission signal STx (see FIG. 3) in which a continuous wave is frequency-modulated in accordance with the voltage waveform output from the modulation device 2, for example. The amplifier 4 takes, as an input, the transmission signal STx output from the voltage controlled oscillator 3, amplifies the transmission signal STx, and outputs the amplified transmission signal STx to the transmission antenna 5.

The transmission antenna 5 takes, as an input, the amplified transmission signal STx output from the amplifier 4, and transmits an electromagnetic wave corresponding to the amplitude and the frequency of the transmission signal STx as a transmission wave. More specifically, the transmission antenna 5 transmits a frequency-modulated continuous wave (FM-CW) in accordance with the transmission signal STx output from the amplifier 4.

The reception antenna 6 receives the reflected wave as a reception wave. The reflected wave is obtained in a manner that the transmission wave transmitted from the transmission antenna 5 is reflected by a target existing in the measurement range of the radar apparatus 100 and then is brought back to the radar apparatus 100. The reception antenna 6 outputs a reception signal SRx (see FIG. 3) corresponding to the amplitude and the frequency of the received reception wave, to the low noise amplifier 7.

The low noise amplifier 7 takes, as an input, the reception signal SRx output from the reception antenna 6, amplifies the reception signal SRx, and outputs the reception signal SRx to the mixer 8. The mixer 8 is configured by, for example, a multiplier. The mixer 8 takes, as an input, the amplified reception signal SRx output from the low noise amplifier 7 and the transmission signal STx output from the voltage controlled oscillator 3. The mixer 8 multiplies the input reception signal SRx and transmission signal STx, and generates a beat frequency signal SBf (see FIG. 4) of a frequency being a difference between frequencies of the above signals, that is, a difference between the frequency of a transmission wave and the frequency of a reception wave. Then, the mixer 8 outputs the generated beat frequency signal SBf to the low-pass filter 9.

The low-pass filter 9 takes, as an input, the beat frequency signal SBf output from the mixer 8, extracts the low frequency component of the beat frequency signal SBf, and outputs the extracted low frequency component to the A/D converter 10. The A/D converter 10 takes, as an input, the low frequency component of the beat frequency signal SBf output from the low-pass filter 9, and outputs digital data to the processing period setting function F2 of the signal processing device 1. The above digital data is obtained by sampling the beat frequency signal SBf at a predetermined sampling cycle.

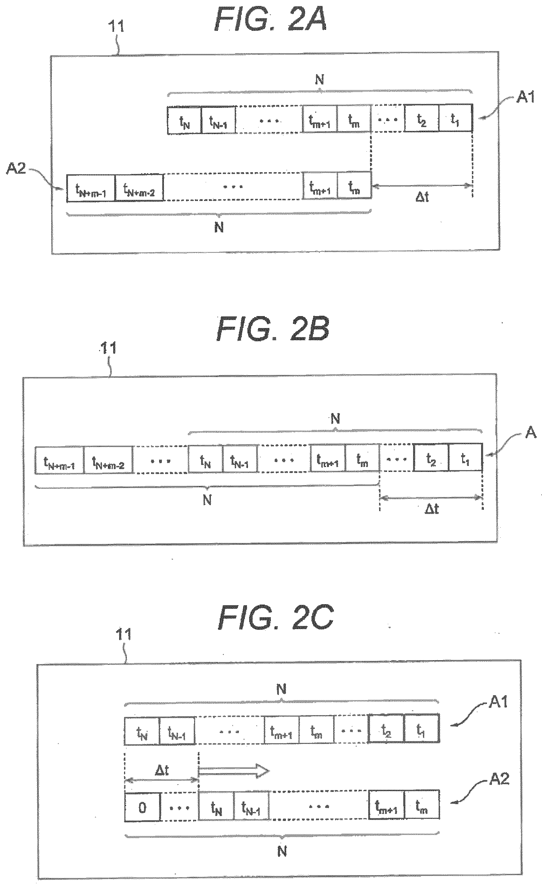

The processing period setting function F2 of the signal processing device 1 takes, as an input, the digital data of the beat frequency signal SBf output from the A/D converter 10 and sets the plurality of processing periods T1 and T2 by the central processing unit (see FIGS. 2A to 2C, 3, and 4). The plurality of processing periods T1 and T2 are set by shifting a time within the modulation period T of the transmission wave. More specifically, the central processing unit of the signal processing device 1 stores, for example, pieces of time-series data of the digital data of the beat frequency signal SBf corresponding to the plurality of processing periods T1 and T2, in the storage device 11.

FIGS. 2A to 2C are explanatory diagrams of examples of the storage device 11 constituting the signal processing device 1 in the radar apparatus 100, respectively. FIG. 3 is an explanatory diagram of the modulation pattern generation function F1 and the processing period setting function F2 of the signal processing device 1. More specifically, FIG. 3 is a graph that uses time for a horizontal axis and a frequency for a vertical axis, and shows a relation between the transmission signal STx corresponding to the transmission wave, the reception signal SRx corresponding to the reception wave, and a plurality of processing periods T1 and T2. FIG. 4 is an explanatory diagram of the processing period setting function F2. More specifically, FIG. 4 is a graph that uses time for a horizontal axis and an amplitude for a vertical axis, and shows a relation between the beat frequency signal SBf and the plurality of processing periods T1 and T2.

The processing period setting function F2 of the signal processing device 1 sets a plurality of processing periods T1 and T2 by shifting the time Δt within the modulation period T of the transmission wave, that is, the transmission signal STx, for example, by the central processing unit. In the radar apparatus 100 in the present embodiment, the processing period setting function F2 of the signal processing device 1 sets a first processing period T1 and a second processing period T2 as the plurality of processing periods T1 and T2 by, for example, the central processing unit. Here, the plurality of processing periods T1 and T2 has, for example, a period that overlaps a portion of each of the processing periods T1 and T2 within the modulation period T of the transmission signal STx and is common to all the processing periods T1 and T2.

Further, the processing period setting function F2 of the signal processing device 1 stores time-series data of N pieces of digital data (N is a natural number) corresponding to each of the plurality of processing periods T1 and T2, in the storage device 11, for example, by the central processing unit. The storage device 11 has a plurality of storage areas A1 and A2 for separately storing pieces of the time-series data in the respective processing periods T1 and T2, as illustrated in FIGS. 2A and 2C, for example.

In this case, the processing period setting function F2 of the signal processing device 1 sequentially records pieces of the time-series data in the processing periods T1 and T2 into the respective storage areas A1 and A2, as illustrated in FIG. 2A, for example, by the central processing unit. At this time, the central processing unit records N pieces of time-series data tₘ, tₘ₊₁,..., t_{N+m-2}, and t_{N+m-1} in the storage area A2 when recording pieces of time-series data of the second time and the subsequent times. The N pieces of time-series data tₘ, tₘ₊₁, ...., t_{N+m-2}, and t_{N+m-1} are obtained by shifting N pieces of time-series data t₁, t₂,..., t_{N-1}, and t_{N} previously recorded in the storage area A1 by a predetermined number of pieces of data corresponding to the time Δt.

Further, the processing period setting function F2 of the signal processing device 1 records N pieces of time-series data t₁, t₂, ..., t_{N-1}, and t_{N} in each of the storage areas A1 and A2 illustrated in FIG. 2C, for example, by the central processing unit. Further, the central processing unit sequentially reads N pieces of time-series data in the processing periods T1 and T2 from the respective storage areas A1 and A2. At this time, when the central processing unit reads pieces of the time-series data in the storage area A2 from the second time and the subsequent times, the central processing unit reads N pieces of time-series data tₘ, tₘ₊₁,..., t_{N-1}, t_{N}, ..., 0 obtained by performing bit-shifting and zero-filling on the N pieces of previously-read time-series data t₁, t₂,..., t_{N-1}, and t_{N} in the storage area A1 by a predetermined number of pieces of data corresponding to the time Δt.

Further, for example, as illustrated in FIG. 2B, the storage device 11 may have a storage area A for storing pieces of time-series data in each of the processing periods T1 and T2, that is, (N+m-1) (N and m are natural numbers) pieces of time-series data t₁, t₂,..., t_{N+m-2}, and t_{N+m-1} including pieces of time-series data t₁, t₂,..., t_{N-1}, and t_{N}, and pieces of time-series data tₘ, tₘ₊₁,..., t_{N+m-2}, and t_{N+m-1}. In this case, in the processing period setting function F2 of the signal processing device 1, the central processing unit reads N pieces of time-series data in each of the processing periods T1 and T2 from the time-series data stored in the storage area A. At this time, the central processing unit reads pieces of time-series data tₘ, tₘ₊₁,..., t_{N+m-2}, and t_{N+m-1} when reading pieces of time-series data of the second time and the subsequent times. The pieces of time-series data tₘ, tₘ₊₁, ..., t_{N+m-2}, and t_{N+m-1} are obtained by shifting N pieces of previously-read time-series data t₁, t₂,..., t_{N-1}, and t_{N} by a predetermined number of pieces of data corresponding to the time Δt.

The first FFT processing function F31 of the signal processing device 1 illustrated in FIG. 1 reads the time-series data of the beat frequency signal SBf in the first processing period T1, which is stored in the storage device 11, and performs fast Fourier transform (FFT) processing, for example, by the central processing unit. That is, in the first FFT processing function F31, the central processing unit performs FFT processing on the time-series data of the digital data of the beat frequency signal SBf corresponding to the first processing period T1 illustrated in FIG. 4. The first FFT processing function F31 outputs the processing result to the peak detection function F4 of the signal processing device 1 by, for example, the central processing unit.

Further, the second FFT processing function F32 of the signal processing device 1 reads the time-series data of the beat frequency signal SBf in the second processing period T2, which is stored in the storage device 11, and performs fast Fourier transform (FFT) processing, for example, by the central processing unit. That is, in the second FFT processing function F32, the central processing unit performs FFT processing on the time-series data of the digital data of the beat frequency signal SBf corresponding to the second processing period T2 illustrated in FIG. 4. The second FFT processing function F32 outputs the processing result to the peak detection function F4 of the signal processing device 1 by, for example, the central processing unit.

FIG. 5 is an explanatory diagram of the FFT processing functions F31 and F32 and the peak detection function F4 of the signal processing device 1. More specifically, FIG. 5 is a graph in which a frequency is used for a horizontal axis, and signal strength is used for a vertical axis. Although separate graphs corresponding to the respective processing periods T1 and T2 can be obtained from the processing results of the beat frequency signal SBf in the processing periods T1 and T2, the processing results for the processing periods T1 and T2 will be described using one graph in FIG. 5. In the FFT processing functions F31 and F32, the central processing unit outputs the signal strength for each frequency as the processing results corresponding to the respective processing periods T1 and T2, as illustrated in FIG. 5.

In the peak detection function F4 of the signal processing device 1, the central processing unit takes, as an input, the results of FFT processing of the beat frequency signal SBf in the respective processing periods T1 and T2, which are output from the FFT processing functions F31 and F32. Then, in the peak detection function F4, the central processing unit detects a peak signal P1 having a level higher than a noise level, from the result of FFT processing of the beat frequency signal SBf in the processing period T1. In addition, the central processing unit outputs information on frequency corresponding to the peak signal P1, and the phase and the amplitude of the peak signal P1, to the distance and speed calculation function F5. Further, in the peak detection function F4, the central processing unit detects a peak signal P2. having a level higher than a noise level, from the result of FFT processing of the beat frequency signal SBf in the second processing period T2. In addition, the central processing unit outputs information on frequency corresponding to the peak signal P2, and the phase and the amplitude of the peak signal P2, to the distance and speed calculation function F5.

In the distance and speed calculation function F5 of the signal processing device 1, the central processing unit calculates the distance to the target and the relative speed of the target based on the frequencies, the phases, and the amplitudes of the peak signals P1 and P2 output by the peak detection function F4.

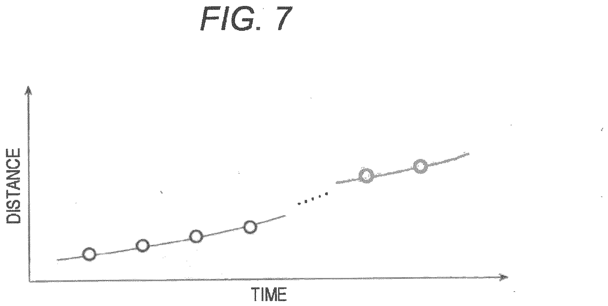

FIGS. 6 and 7 are explanatory diagrams of the distance and speed calculation function F5 of the signal processing device 1. More specifically, FIG. 6 illustrates information on the peak signals P1 and P2 displayed on a complex plane. FIG. 7 is a graph showing the time change of the distance to the target, which is calculated by the distance and speed calculation function F5, where time is used for a horizontal axis is time and a distance is used for a vertical axis. An example of a calculation expression for obtaining the distance to the target from a phase difference φ between the peak signals P1 and P2 will be described below.

When the distance to the target is set as R, the speed of the electromagnetic wave, that is, the speed of light is set as c, and the delay time between the transmission wave and the reception wave due to the distance R is set as τ, τ = 2R/c is established. Further, the slope m of the frequency modulation of the transmission signal STx illustrated in FIG. 3 is expressed as m = ΔF/T by a frequency modulation width ΔF and the modulation period T. At this time, the frequency fb of the beat frequency signal SBf is represented by the following expression (1).
[Math. 1] $fb = τ ⋅ m = \frac{2 R}{c} m = \frac{2 R}{c} \frac{Δ F}{T}$

The angular frequency ωb of the beat frequency signal SBf is represented by ωb = 2π·fb, based on the frequency fb of the beat frequency signal SBf obtained by the above expression (1).

Further, when a difference between the center frequencies f2 and f1 in the processing periods of the FFT processing functions F31and F32 is set as Δf, the following expression (2) is established.
[Math. 2] $Δ f = m ⋅ Δ t = \frac{Δ F}{T} Δ t = \left(f2-f1\right)$

From the above expression (2), Δt can be obtained based on the following expression (3).
[Math. 3] $Δ t = \frac{T}{Δ F} Δ f = \frac{T}{Δ F} \left(f2-f1\right)$

That is, the phase difference φ between the peak signals P1 and P2, which is the processing results of the FFT processing functions F31 and F32, is as in the following expression (4).
[Math. 4] $\begin{matrix}∅ = ωb ⋅ Δ t = 2 π ⋅ fb ⋅ \left(\frac{T}{Δ F}Δf\right) \\ = 2 π ⋅ \left(\frac{2 R}{c}\frac{Δ F}{T}\right) ⋅ \left(\frac{T}{Δ F}Δf\right) \\ = \frac{4 πR}{c} Δ f = \frac{4 πR}{c} \left(f2-f1\right)\end{matrix}$

Thus, the distance R to the target is obtained by the following expression (5), based on the above expression (4).
[Math. 5] $R = \frac{∅}{4 π} \frac{c}{\left(f2-f1\right)}$

That is, when the difference (f2-f1) between the center frequencies f2 and f1 in the processing periods of the FFT processing functions F31 and F32 is constant, the distance R to the target is proportional to the phase difference φ between the peak signals P1 and P2, which are the processing results of the FFT processing functions F31 and F32.

Next, a method of setting the time Δt being the delay time between the first processing period T1 and the second processing period T2, in the processing period setting function F2 of the signal processing device 1 will be described. As described above, in the processing period setting function F2, the central processing unit takes, as an input, the digital data of the beat frequency signal SBf output from the A/D converter 10. A sampling period tₛ and a sampling frequency fₛ of A/D conversion by the A/D converter 10 satisfy a relation of tₛ = 1/fₛ. When the number of samplings of digital data is set as k (k is a natural number), the delay time Δtₖ due to sampling is Δtₖ = k·tₛ = k(1/fₛ). In this case, the difference Δfₖ between the center frequencies f2ₖ and f1ₖ generated by this delay time Δtₖ is represented by the following expression (6).
[Math. 6] $Δ {f}_{k} = k ⋅ {t}_{s} ⋅ \frac{Δ F}{T} = \left(f{2}_{k}-f{1}_{k}\right)$

Then, in the calculation of calculating the distance R from the phase difference φ between the peak signals P1 and P2 which are the processing results of the FFT processing functions F31 and F32, the maximum value φₘₐₓ of the phase difference φ to be measured is determined, and the maximum distance Rₘₐₓ that can be measured at this time is obtained as in the following expression (7).
[Math. 7] ${R}_{max} = \frac{{∅}_{max}}{4 π} \frac{c}{\left(f{2}_{k}-f{1}_{k}\right)} = \frac{{∅}_{max}}{4 π} c ⋅ \frac{T}{Δ F} ⋅ \frac{{f}_{s}}{k}$

Then, k being the number of samplings of digital data corresponding to the time Δt being the delay time between the first processing period T1 and the second processing period T2 is calculated as in the following expression (8), based on the above expression (7).
[Math. 8] $k = \frac{{∅}_{max}}{4 π} c ⋅ \frac{T}{Δ F} ⋅ \frac{{f}_{s}}{{R}_{max}}$

In the above expression (8), when the maximum value φₘₐₓ of the phase difference φ is π, k which is the number of samplings of digital data is as in the following expression (9).
[Math. 9] $k = \frac{c}{4} ⋅ \frac{T}{Δ F} ⋅ \frac{{f}_{s}}{{R}_{max}}$

As described above, in the processing period setting function F2 of the signal processing device 1, the central processing unit determines the number k of pieces of digital data corresponding to ΔT being the delay time between the first processing period T1 and the second processing period T2. Thus, in the processing period setting function F2, the central processing unit sets a plurality of processing periods T1 and T2 by shifting the time Δt within the modulation period T of the transmission wave, that is, the transmission signal STx.

Then, as described above, in the FFT processing functions F31 and F32 of the signal processing device 1, the central processing unit performs a fast Fourier transform on the pieces of the time-series data corresponding to each of the processing periods T1 and T2. Further, the central processing unit detects the peak signals P1 and P2 from the processing results of the FFT processing functions F31 and F32 in the peak detection function F4 of the signal processing device 1, and calculates the distance R to the target and the relative speed of the target based on the frequencies, the phases, and the amplitudes of the peak signals P1 and P2 in the respective processing periods T1 and T2 in the distance and speed calculation function F5.

In the distance and speed calculation function F5 of the signal processing device 1, the central processing unit can calculate the relative speed of the target based on the time change of the distance to the target, for example, as illustrated in FIG. 7. Here, the relative speed of the target refers to the relative speed of the target with respect to the radar apparatus 100. That is, when the radar apparatus 100 is mounted on a vehicle, the relative speed of the target means the relative speed between the target and the vehicle on which the radar apparatus 100 is mounted.

An operation of the radar apparatus 100 in the present embodiment will be described below while comparing with a radar apparatus in the related art.

For example, in a medium and short range millimeter-wave radar mounted on a vehicle, such as the radar apparatus 100 in the present embodiment, the capability of measuring the distance to a target such as a pedestrian, a surrounding vehicle, or another obstacle, an angle, the relative speed, and the like with high accuracy is required. For example, the radar apparatus in the related art disclosed in PTL 1 compares the peak groups appearing in the beat signal frequency spectra of the first section and the second section, which are modulation sections of different transmission waves, and detects the relative speed and relative distance of the target from the phase change amount that causes the frequencies to be substantially equal to each other. In this case, if the relative speed between the own vehicle equipped with the radar apparatus and the target increases, the positional relation between the own vehicle and the target changes. Thus, it is not possible to detect the relative speed and the relative distance with high accuracy.

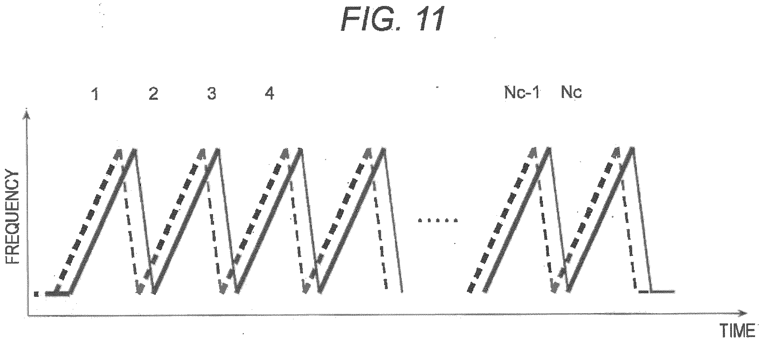

An example of a speed calculation method of a radar apparatus in the related art will be described with reference to FIGS. 11 to 14. In FIG. 11, time is used for a horizontal axis is time, and a frequency is used for a vertical axis is frequency. A transmission wave of an FM-CW radar apparatus is indicated by a broken line, and a reception wave is indicated by a solid line. Further, in FIG. 11, numbers from 1 to Nc are assigned to the respective modulation periods of a transmission wave. For example, the radar apparatus in the related art generates a beat frequency signal from a transmission wave and a reception wave as illustrated in FIG. 11, sets a processing range of the generated beat frequency signal in each of the modulation periods from 1 to Nc, and performs FFT processing on the beat frequency signal for each modulation period.

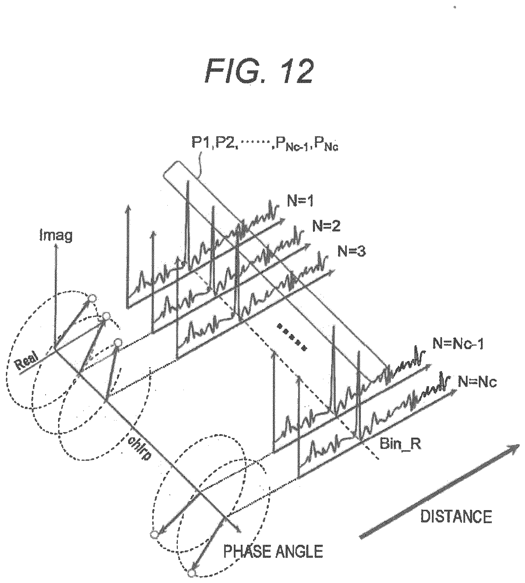

FIG. 12 illustrates the results of the first FFT processing in each of the modulation periods from N = 1 to N = Nc (N and Nc are natural numbers) in the radar apparatus in the related art. By detecting peak signals P1, P2,... P_{Nc-1}, and P_{Nc} from the result of the first FFT processing in each modulation period, the distance to the target in each of the modulation periods corresponding to the frequencies of the peak signals P1, P2,... P_{Nc-1}, and P_{Nc} is obtained.

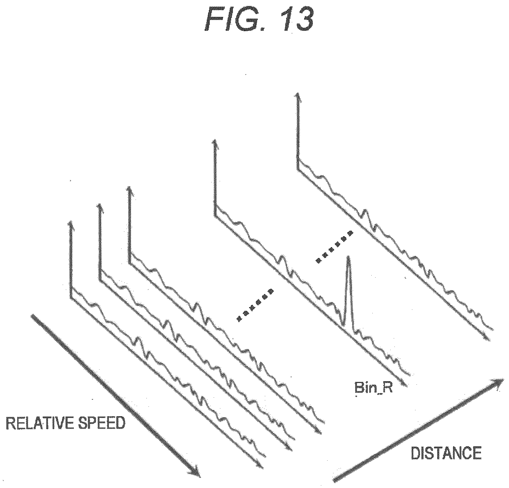

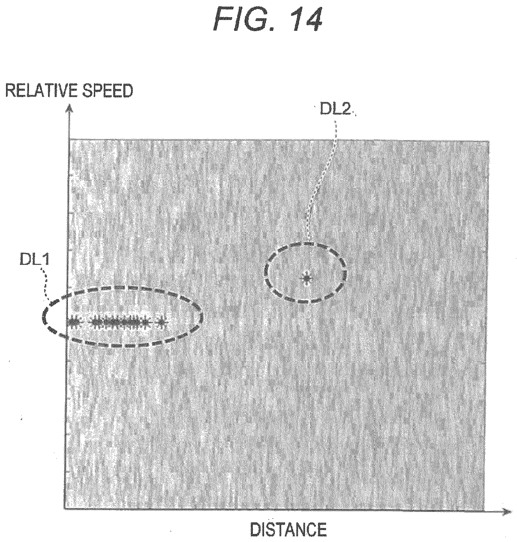

FIG. 13 illustrates the result obtained by performing the second FFT processing on the information on the distance in each modulation period based on the result of the first FFT processing illustrated in FIG. 12. From the result of such two-dimensional FFT processing, as illustrated in FIG. 14, a color map in which the distance to the target is used for a horizontal axis and the relative speed of the target is used for a vertical axis is obtained. In FIG. 14, a plurality of points surrounded by the broken line DL1 indicate a target having a relative speed of zero, and the points surrounded by the broken line DL2 indicate a moving body.

In such a radar apparatus in the related art, when the relative speed between the own vehicle equipped with the radar apparatus and the target increases, the positional relation between the own vehicle and the target changes in each modulation period of the transmission wave. Thus, it is not possible to detect the relative speed and the relative distance with high accuracy.

Further, in the radar apparatus in the related art disclosed in PTL 2, in a situation in which a plurality of targets exist, even though the measurement result of one of the first modulation section and the second modulation section includes a large error, it is possible to verify the correctness of the measurement result by the measurement in the other modulation section. Thus, it is possible to exhibit an excellent effect that it is possible to reduce an output of erroneous detection data. However, in such a radar apparatus in the related art, an apparatus configuration that changes a modulation pattern between the first modulation section and the second modulation section is required. In addition, ringing may occur in the frequency of radio waves when the modulation pattern is changed, and thus the signal-to-noise ratio (S/N ratio) may decrease.

On the other hand, as described above, the radar apparatus 100 in the present embodiment includes the transmission antenna 5 that transmits a transmission wave, the reception antenna 6 that receives a reception wave, the mixer 8 that outputs a beat frequency signal SBf indicating a difference between a frequency of the transmission wave and a frequency of the reception wave, and the signal processing device 1 that processes the beat frequency signal SBf and calculates a distance to a target. The signal processing device 1 sets a plurality of processing periods T1 and T2 by shifting a time within a modulation period T of a transmission wave, processes the beat frequency signal SBf in the respective processing periods T1 and T2 to detect peak signals P1 and P2, and calculates the distance to a target based on a phase difference φ between a plurality of the peak signals P1 and P2.

With such a configuration, the radar apparatus 100 in the present embodiment is capable of measuring the distance to the target more accurately than the related art, only by signal processing of setting a plurality of processing periods T1 and T2 within the modulation period T without changing the pattern of frequency modulation of a transmission wave. That is, by setting the plurality of processing periods T1 and T2 for each modulation period T of the transmission wave, it is possible to measure the change in distance to a target within each modulation period T. Thus, according to the present embodiment, it is possible to provide the FM-CW type radar apparatus 100 capable of measuring the distance to a target more accurately than the related art.

Further, according to the radar apparatus 100 in the present embodiment, it is possible to measure the distance to a target more accurately than the related art. Thus, it is possible to measure the relative speed of the target with higher reliability and accuracy than the related art. Therefore, according to the radar apparatus 100 in the present embodiment, it is possible to measure the relative speed of a target having a large relative speed at which the distance changes within the modulation period of the transmission wave, more accurately than the related art. Thus, according to the radar apparatus 100 in the present embodiment, it is possible to measure the shape and size of an object, and the distance and the angle to the object, and the like with higher accuracy than the related art. For example, it is possible to detect an empty space in a lane at an intersection at which traffic congestion occurs.

Further, in the radar apparatus 100 in the present embodiment, the signal processing device 1 sets the first processing period T1 and the second processing period T2 as the plurality of processing periods T1 and T2. With this configuration, it is possible to calculate the distance to a target during the time ΔT being the delay time between the first processing period T1 and the second processing period T2, within each modulation period T of a transmission signal STx. Thus, according to the radar apparatus 100 in the present embodiment, it is possible to measure the distance to the target more accurately than the related art, without changing the modulation pattern of the frequency of the transmission wave.

Further, the radar apparatus 100 in the present embodiment includes the A/D converter 10 that converts the beat frequency signal SBf into digital data. Further, the signal processing device 1 includes the central processing unit and the storage device 11. The central processing unit of the signal processing device 1 stores pieces of the time-series data of the digital data corresponding to the plurality of processing periods T1 and T2 in the storage device 11, and performs a fast Fourier transform on pieces of time-series data corresponding to each of the processing periods T1 and T2 to detect peak signals P1 and P2. Then, the central processing unit calculates the distance R to a target and the relative speed of the target based on the frequencies, the phases, and the amplitudes of the peak signals P1 and P2 in the respective processing periods T1 and T2.

With this configuration, the radar apparatus 100 can set a plurality of processing periods T1 and T2 by shifting the time within the modulation period T of the transmission wave by the central processing unit and the storage device 11 constituting the signal processing device 1. Furthermore, the central processing unit can perform FFT processing on the beat frequency signal SBf during in each of the processing periods T1 and T2 to detect the peak signals P1 and P2, and calculate the distance R to a target based on the phase difference φ between the plurality of peak signals P1 and P2.

Further, in the radar apparatus 100 in the present embodiment, the storage device 11 has a plurality of storage areas A1 and A2 for separately storing the time-series data in each of the processing periods T1 and T2, as illustrated in FIG. 2A, for example. In this case, the central processing unit of the signal processing device 1 sequentially records pieces of the time-series data in the processing periods T1 and T2 into the respective storage areas A1 and A2, for example. At this time, the central processing unit records pieces of time-series data tₘ, tₘ₊₁, ... , t_{N+m-2}, and t_{N+m-1} when recording pieces of time-series data of the second time and the subsequent times. The pieces of time-series data tₘ, tₘ₊₁,..., t_{N+m-2}, and t_{N+m-1} are obtained by shifting pieces of previously-recorded time-series data t₁, t₂,..., t_{N-1}, and t_{N} by a predetermined number of pieces of data corresponding to the time Δt.

Further, in the radar apparatus 100 in the present embodiment, the storage device 11 has the storage area A for storing pieces of time-series data t₁, t₂,..., t_{N+m-2}, and t_{N+m-1} including pieces of time-series data in the respective processing periods T1 and T2, for example, as illustrated in FIG. 2B. In this case, the central processing unit of the signal processing device 1 reads pieces of time-series data in each of the processing periods T1 and T2 from the time-series data stored in the storage area A. At this time, the central processing unit reads pieces of time-series data tₘ, tₘ₊₁, ..., t_{N+m-2}, and t_{N+m-1} when reading pieces of time-series data of the second time and the subsequent times. The pieces of time-series data tₘ, tₘ₊₁,..., t_{N+m-2}, and t_{N+m-1} are obtained by shifting pieces of previously-read time-series data t₁, t₂, ..., t_{N-1}, and t_{N} by a predetermined number of pieces of data corresponding to the time Δt.

Further, in the radar apparatus 100 in the present embodiment, the storage device 11 has the plurality of storage areas A1 and A2 for separately storing the time-series data in the respective processing periods T1 and T2, for example, as illustrated in FIG. 2C. At this time, for example, when the central processing unit of the signal processing device 1 reads pieces of the time-series data in the storage area A2 from the second time and the subsequent times, the central processing unit reads N pieces of time-series data tₘ, tₘ₊₁,..., t_{N-1}, t_{N},..., 0 obtained by performing bit-shifting and zero-filling on the N pieces of previously-read time-series data t₁, t₂,..., t_{N-1}, and t_{N} in the storage area A1 by a predetermined number of pieces of data corresponding to the time Δt.

With such a configuration, the radar apparatus 100 can set the plurality of processing periods T1 and T2 by shifting the time within the modulation period T of the transmission wave by the central processing unit and the storage device 11 constituting the signal processing device 1. Furthermore, the central processing unit can perform FFT processing on the beat frequency signal SBf during in each of the processing periods T1 and T2 to detect the peak signals P1 and P2, and calculate the distance R to a target based on the phase difference φ between the plurality of peak signals P1 and P2.

Further, in the radar apparatus 100 in the present embodiment according to the invention, the plurality of processing periods T1 and T2 set by the signal processing device 1 has a period that overlaps a portion of each of the processing periods T1 and T2 within the modulation period T and is common to all the processing periods T1 and T2. With this configuration, it is possible to calculate the distance to a target during the time ΔT being the delay time between the first processing period T1 and the second processing period T2, within each modulation period T of a transmission signal STx. Thus, according to the radar apparatus 100 in the present embodiment, it is possible to measure the distance to the target more accurately than the related art, without changing the modulation pattern of the frequency of the transmission wave.

### [Embodiment 2]

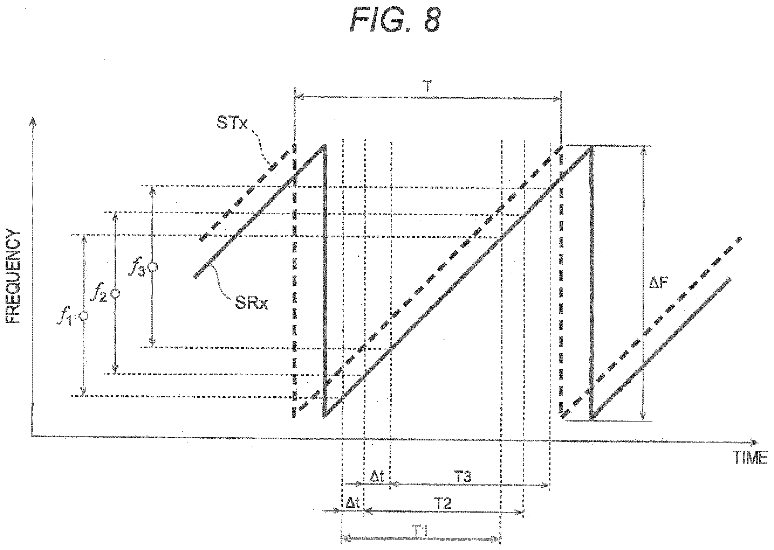

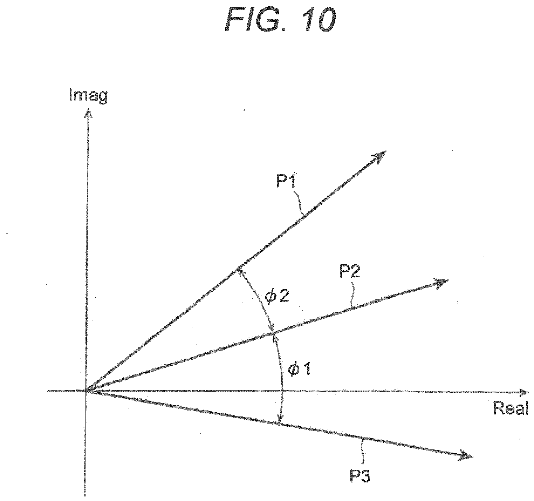

Next, Embodiment 2 of the radar apparatus according to the present disclosure will be described with reference to FIGS. 8 and 10 by quoting FIGS. 1 to 5 referred to in Embodiment 1 described above. A radar apparatus 100 in the present embodiment mainly differs from the radar apparatus 100 in Embodiment 1 illustrated in FIG. 1, in the configuration of the processing period setting function F2 of the signal processing device 1. Since the other points of the radar apparatus 100 in the present embodiment are similar to those of the radar apparatus 100 in Embodiment 1, the similar parts are denoted by the same reference signs, and the description thereof will be omitted.

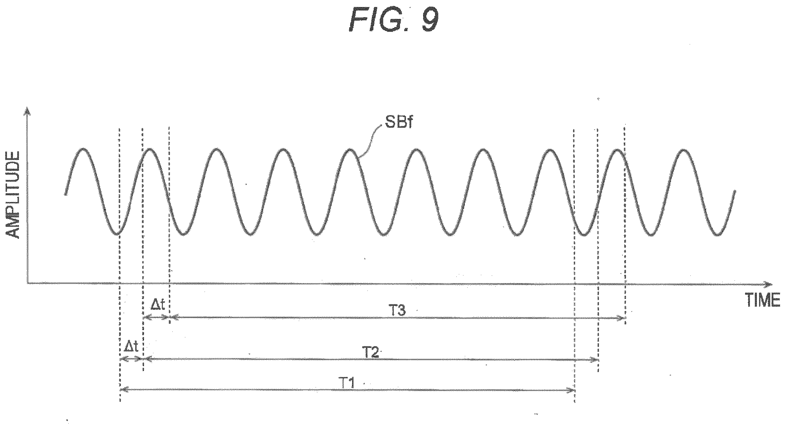

FIG. 8 is an explanatory diagram of the processing period setting function F2 of the signal processing device 1 in the radar apparatus 100 according to Embodiment 2. FIG. 9 is an explanatory diagram of the processing period setting function F2 of the signal processing device 1 in the present embodiment. FIG. 10 is an explanatory diagram of the distance and speed calculation function F5 of the signal processing device 1. In the radar apparatus 100 in the present embodiment, the signal processing device 1 has a first processing period T1, a second processing period T2, and a third processing period T3 as a plurality of processing periods T1, T2, and T3 set within a modulation period T.

Further, although not illustrated, in the radar apparatus 100 in the present embodiment, the signal processing device 1 has a third FFT processing function in addition to the first FFT processing function F31 and the second FFT processing function F32. As illustrated in FIG. 9, the first FFT processing function F31 performs FFT processing on the beat frequency signal SBf in the first processing period T1. The second FFT processing function F32 performs FFT processing on the beat frequency signal SBf in the second processing period T2. The third FFT processing function processes the beat frequency signal SBf in the third processing period T3.

Further, in the radar apparatus 100 in the present embodiment, the peak detection function F4 of the signal processing device 1 takes, as an input, the processing result of the third FFT processing function in addition to the processing results of the first and second FFT processing functions F31 and F32. Then, in the peak detection function F4, the central processing unit detects peak signals P1, P2, and P3 having a level higher than a noise level, from the results of FFT processing of the beat frequency signal SBf in the processing periods T1, T2, and T3. In addition, the central processing unit outputs information corresponding to the peak signals P1, P2, and P3, to the distance and speed calculation function F5.

Further, in the radar apparatus 100 in the present embodiment, the distance and speed calculation function F5 of the signal processing device 1 obtains the distance to a target from phase differences φ1 and φ2 between the peak signals P1, P2, and P3 illustrated in FIG. 10. The arrangement of the phase differences φ1 and φ2 between the three peak signals P1, P2, and P3 correlates with the positiveness and negativeness of the relative speed of the target. Therefore, according to the radar apparatus 100 in the present embodiment, it is possible to not only obtain the similar effect to the effect of the radar apparatus 100 in Embodiment 1 described above, and but also determine whether a target is approaching or moving away.

Hitherto, the radar apparatus according to the embodiments of the present disclosure has been described in detail above with reference to the drawings

### Reference Signs List

- 1: signal processing device
- 5: transmission antenna
- 6: reception antenna
- 8: mixer
- 10: A/D converter
- 11: storage device
- 100: radar apparatus
- A: storage area
- A1: storage area
- A2: storage area
- P1: peak signal
- P2: peak signal
- P3: peak signal
- SBf: beat frequency signal
- T: modulation period
- T1: processing period (first processing period)
- T2: processing period (second processing period)
- T3: processing period (third processing period)
- Δt: time
- φ: phase difference
- φ1: phase difference
- φ2: phase difference

## Claims

1. A radar apparatus of a frequency-modulated continuous wave type, the radar apparatus comprising:
a transmission antenna (5) that transmits a transmission wave;
a reception antenna (6) that receives a reception wave;
a mixer (8) that outputs a beat frequency signal (SBf) indicating a difference between a frequency of the transmission wave and a frequency of the reception wave; and
a signal processing device (1) that processes the beat frequency signal (SBf) and calculates a distance (R) to a target,
wherein the signal processing device (1)
sets a plurality of processing periods (T1, T2, T3) by shifting a detection time within a modulation period (T) of the transmission wave,
processes the beat frequency signal (SBf) in each of the processing periods to detect a peak signal (P1, P2, P3), and
calculates the distance (R) based on a phase difference between a plurality of the peak signals (P1, P2, P3),
wherein the distance (R) to the target in the calculation is obtained by the following expression: $R = \frac{∅}{4 π} \frac{c}{\left(f2-f1\right)}$
wherein f1 and f2 are center frequencies in processing periods of FFT processing functions (F31, F32) and φ is the phase difference between the peak signals (P1) and (P2), which are the processing results of the FFT processing functions (F31) and (F32),
**characterized in that** the plurality of processing periods (T1, T2, T3) includes a period that overlaps a portion of each of the processing periods within the modulation period (T) and is common to all the processing periods.

2. The radar apparatus according to claim 1, wherein the signal processing device (1) sets a first processing period (T1) and a second processing period (T2) as the plurality of processing periods (T1, T2, T3).

3. The radar apparatus according to claim 1, wherein the signal processing device (1) sets a first processing period (T1), a second processing period (T2), and a third processing period (T3) as the plurality of processing periods (T1, T2, T3).

4. The radar apparatus according to claim 1, further comprising:
an A/D converter (10) that converts the beat frequency signal (SBf) into digital data,
wherein the signal processing device (1) includes a central processing unit and a storage device (11), and
the central processing unit
stores time-series data of the digital data corresponding to the plurality of processing periods (T1, T2, T3) in the storage device,
performs a fast Fourier transform on the time-series data corresponding to each of the processing periods to detect the peak signal (P1, P2, P3), and
calculates the distance (R) and a relative speed of the target based on a frequency, a phase, and an amplitude of the peak signal (P1, P2, P3) in each of the processing periods.

5. The radar apparatus according to claim 4, wherein
the storage device includes a plurality of storage areas for separately storing the time-series data in each of the processing periods, and
when the central processing unit sequentially records pieces of the time-series data in the processing periods into the respective storage areas, the central processing unit records the time-series data shifted by a predetermined number of pieces of data corresponding to the time from the previously-recorded time-series data when recording pieces of the time-series data of the second time and the subsequent **times.**

6. The radar apparatus according to claim 4, wherein
the storage device includes a storage area for storing the time-series data containing the time-series data in each of the processing periods, and
when the central processing unit reads the time-series data in each of the processing periods from the time-series data stored in the storage area, the central processing unit reads the time-series data shifted by a predetermined number of pieces of data corresponding to the time from the previously-read time-series data when reading pieces of the time-series data of the second time and the subsequent **times.**

7. The radar apparatus according to claim 4, wherein
the storage device includes a plurality of storage areas for separately storing the time-series data in each of the processing periods, and
when the central processing unit reads pieces of the time-series data in the processing periods from the respective storage areas, the central processing unit reads the time-series data obtained by performing bit-shifting and zero-filling on the previously-recorded time-series data by a predetermined number of pieces of data corresponding to the time when reading pieces of the time-series data of the second time and the subsequent times.

## Patentansprüche

1. Radarvorrichtung des frequenzmodulierten Dauerstrichtyps, wobei die Radarvorrichtung umfasst:
eine Sendeantenne (5), die eine Sendewelle sendet;
eine Empfangsantenne (6), die eine Empfangswelle empfängt;
einen Mischer (8), der ein Schwebungsfrequenzsignal (SBf) ausgibt, das eine Differenz zwischen einer Frequenz der Sendewelle und einer Frequenz der Empfangswelle angibt; und
eine Signalverarbeitungsvorrichtung (1), die das Schwebungsfrequenzsignal (SBf) verarbeitet und eine Entfernung (R) zu einem Ziel berechnet,
wobei die Signalverarbeitungsvorrichtung (1)
durch Verschieben einer Detektionszeit innerhalb eines Modulationszeitintervalls (T) der Sendewelle mehrere Verarbeitungszeitintervalle (T1, T2, T3) einstellt,
das Schwebungsfrequenzsignal (SBf) in jedem der Verarbeitungszeitintervalle verarbeitet, um ein Spitzensignal (P1, P2, P3) zu detektieren, und
auf der Grundlage einer Phasendifferenz zwischen mehreren der Spitzensignale (P1, P2, P3) die Entfernung (R) berechnet,
wobei die Entfernung (R) zu dem Ziel in der Berechnung durch den folgenden Ausdruck erhalten wird: $R = \frac{ϕ}{4 π} \frac{c}{\left(f2-f1\right)}$
wobei f1 und f2 Mittenfrequenzen in Verarbeitungszeitintervallen von FFT-Verarbeitungsfunktionen (F31, F32) sind und *φ* die Phasendifferenz zwischen den Spitzensignalen (P1) und P2), die die Verarbeitungsergebnisse der FFT-Verarbeitungsfunktionen (F31) und F32) sind, ist,
**dadurch gekennzeichnet, dass** die mehreren Verarbeitungszeitintervalle (T1, T2, T3) ein Zeitintervall enthalten, das einen Abschnitt jedes der Verarbeitungszeitintervalle innerhalb des Modulationszeitintervalls (T) überlappt und allen Verarbeitungszeitintervallen gemeinsam ist.

2. Radarvorrichtung nach Anspruch 1, wobei die Signalverarbeitungsvorrichtung (1) als die mehreren Verarbeitungszeitintervalle (T1, T2, T3) ein erstes Verarbeitungszeitintervall (T1) und ein zweites Verarbeitungszeitintervall (T2) einstellt.

3. Radarvorrichtung nach Anspruch 1, wobei die Signalverarbeitungsvorrichtung (1) als die mehreren Verarbeitungszeitintervalle (T1, T2, T3) ein erstes Verarbeitungszeitintervall (T1), ein zweites Verarbeitungszeitintervall (T2) und ein drittes Verarbeitungszeitintervall (T3) einstellt.

4. Radarvorrichtung nach Anspruch 1, die ferner umfasst:
einen A/D-Umsetzer (10), der das Schwebungsfrequenzsignal (SBf) in digitale Daten umsetzt,
wobei die Signalverarbeitungsvorrichtung (1) eine Zentraleinheit und eine Speichervorrichtung (11) enthält und
wobei die Zentraleinheit
Zeitreihendaten der digitalen Daten, die den mehreren Verarbeitungszeitintervallen (T1, T2, T3) entsprechen, in der Speichervorrichtung speichert,
an den Zeitreihendaten, die jedem der Verarbeitungszeitintervalle entsprechen, eine schnelle Fourier-Transformation ausführt, um das Spitzensignal (P1, P2, P3) zu detektieren, und
in jedem der Verarbeitungszeitintervalle auf der Grundlage einer Frequenz, einer Phase und einer Amplitude des Spitzensignals (P1, P2, P3) die Entfernung (R) und eine Relativgeschwindigkeit des Ziels berechnet.

5. Radarvorrichtung nach Anspruch 4, wobei
die Speichervorrichtung mehrere Speicherbereiche zum getrennten Speichern der Zeitreihendaten in jedem der Verarbeitungszeitintervalle enthält und
die Zentraleinheit dann, wenn die Zentraleinheit Elemente der Zeitreihendaten aufeinanderfolgend in den Verarbeitungszeitintervallen in den jeweiligen Speicherbereichen aufzeichnet, die Zeitreihendaten um eine vorgegebene Anzahl von Elementen von Daten, die der Zeit von den zuvor aufgezeichneten Zeitreihendaten entspricht, verschoben aufzeichnet, wenn sie Elemente der Zeitreihendaten der zweiten Zeit und der nachfolgenden Zeiten aufzeichnet.

6. Radarvorrichtung nach Anspruch 4, wobei
die Speichervorrichtung einen Speicherbereich zum Speichern der Zeitreihendaten, die die Zeitreihendaten in jedem der Verarbeitungszeitintervalle enthalten, enthält und
die Zentraleinheit dann, wenn sie die Zeitreihendaten in jedem der Verarbeitungszeitintervalle von den in dem Speicherbereich gespeicherten Zeitreihendaten liest, die Zeitreihendaten um eine vorgegebene Anzahl von Elementen von Daten, die der Zeit von den zuvor gelesenen Zeitreihendaten entspricht, verschoben liest, wenn sie Elemente der Zeitreihendaten der zweiten Zeit und der nachfolgenden Zeiten liest.

7. Radarvorrichtung nach Anspruch 4, wobei
die Speichervorrichtung mehrere Speicherbereiche zum getrennten Speichern der Zeitreihendaten in jedem der Verarbeitungszeitintervalle enthält und
die Zentraleinheit dann, wenn sie Elemente der Zeitreihendaten in den Verarbeitungszeitintervallen von den jeweiligen Speicherbereichen liest, die erhaltenen Zeitreihendaten durch Ausführen einer Bitverschiebung und Nullauffüllung an den zuvor aufgezeichneten Zeitreihendaten um eine vorgegebene Anzahl von Elementen von Daten, die der Zeit entspricht, liest, wenn sie Elemente der Zeitreihendaten der zweiten Zeit und der nachfolgenden Zeiten liest.

## Revendications

1. Appareil radar d'un type à ondes continues modulées en fréquence, l'appareil radar comprenant :
une antenne d'émission (5) qui émet une onde d'émission ;
une antenne de réception (6) qui reçoit une onde de réception ;
un mélangeur (8) qui sort un signal de fréquence de battement (SBf) indiquant une différence entre une fréquence de l'onde d'émission et une fréquence de l'onde de réception ; et
un dispositif de traitement de signal (1) qui traite le signal de fréquence de battement (SBf) et qui calcule une distance (R) à une cible,
dans lequel le dispositif de traitement de signal (1)
définit une pluralité de périodes de traitement (T1, T2, T3) en décalant un temps de détection à l'intérieur d'une période de modulation (T) de l'onde d'émission,
traite le signal de fréquence de battement (SBf) dans chacune des périodes de traitement pour détecter un signal de crête (P1, P2, P3), et
calcule la distance (R) sur la base d'une différence de phase entre une pluralité des signaux de crête (P1, P2, P3),
dans lequel la distance (R) à la cible dans le calcul est obtenue au moyen de l'expression suivante : $R = \frac{∅}{4 π} \frac{c}{\left(f2-f1\right)}$
où f1 et f2 sont des fréquences centrales dans des périodes de traitement de fonctions de traitement FFT (F31, F 32) et φ est la différence de phase entre les signaux de crête (P1) et (P2), qui sont les résultats de traitement des fonctions de traitement FFT (F31) et (F32),
**caractérisé en ce que** la pluralité de périodes de traitement (T1, T2, T3) inclut une période qui est en chevauchement avec une portion de chacune des périodes de traitement à l'intérieur de la période de modulation (T) et qui est commune à la totalité des périodes de traitement.

2. Appareil radar selon la revendication 1, dans lequel le dispositif de traitement de signal (1) définit une première période de traitement (T1) et une deuxième période de traitement (T2) en tant que pluralité de période de traitement (T1, T2, T3).

3. Appareil radar selon la revendication 1, dans lequel le dispositif de traitement de signal (1) définit une première période de traitement (T1), une deuxième période de traitement (T2), et une troisième période de traitement (T3) en tant que pluralité de périodes de traitement (T1, T2, T3).

4. Appareil radar selon la revendication 1, comprenant en outre :
un convertisseur A/N (10) qui convertit le signal de fréquence de battement (SBf) en données numériques,
dans lequel le dispositif de traitement de signal (1) inclut une unité centrale de traitement et un dispositif de stockage (11), et
l'unité centrale de traitement
stocke des données en série temporelle des données numériques correspondant à la pluralité de périodes de traitement (T1, T2, T3) dans le dispositif de stockage,
effectuer une transformée de Fourier rapide sur les données en série temporelle correspondant à chacune des périodes de traitement pour détecter le signal de crête (P1, P2, P3), et
calcule la distance (R) et une vitesse relative de la cible sur la base d'une fréquence, d'une phase, et d'une amplitude du signal de crête (P1, P2, P3),
dans chacune des périodes de traitement.

5. Appareil radar selon la revendication 4, dans laquelle
le dispositif de stockage inclut une pluralité de zones de stockage pour stocker séparément les données en série temporelle dans chacune des périodes de traitement, et
quand l'unité centrale de traitement enregistre séquentiellement des éléments des données en série temporelle dans les périodes de traitement jusque dans les zones de stockage respectives, l'unité centrale de traitement enregistre les données en série temporelle décalées à raison d'un nombre prédéterminé d'éléments de données correspondant au temps à compter des données en série temporelle précédemment enregistrées lors de l'enregistrement d'éléments des données en série temporelle du deuxième temps et des temps suivants.

6. Appareil radar selon la revendication 4, dans lequel
le dispositif de stockage inclut une zone de stockage pour stocker les données en série temporelle contenant les données en série temporelle dans chacune des périodes de traitement, et
quand l'unité centrale de traitement lit les données en série temporelle dans chacune des périodes de traitement à partir des données en série temporelle stockées dans la zone de stockage, l'unité centrale de traitement lit les données en série temporelle décalées à raison d'un nombre prédéterminé d'éléments de données correspondant au temps à compter des données en série temporelle précédemment lues lors de la lecture d'éléments des données en série temporelle du deuxième temps et des temps suivants.

7. Appareil radar selon la revendication 4, dans lequel
le dispositif de stockage inclut une pluralité de zones de stockage pour stocker séparément les données en série temporelle dans chacune des périodes de traitement, et
quand l'unité centrale de traitement lit des éléments des données en série temporelle dans les périodes de traitement à partir des zones de stockage respectives, l'unité centrale de traitement lit les données en série temporelle obtenues en effectuant un décalage de bits et un remplissage de zéros sur les données en série temporelle précédemment enregistrées à raison d'un nombre prédéterminé d'éléments de données correspondant au temps lors d'une lecture d'éléments des données en série temporelle du deuxième temps et des temps suivants.
